# EUROPÄISCHE PATENTSCHRIFT

(11) **EP 2 335 058 B1**
(45) Veröffentlichungstag und Bekanntmachung des Hinweises auf die Patenterteilung: **12.03.2014**
(21) Anmeldenummer: 09778370.8
(22) Anmeldetag: 07.09.2009
(51) Int. Cl.: G01N 23/04

(54) **VERFAHREN UND RÖNTGENCOMPUTERTOMOGRAF ZUR ZERSTÖRUNGSFREIEN PRÜFUNG VON AUS MATERIALLAGEN AUFGEBAUTEN OBJEKTEN MITTELS RÖNTGENCOMPUTERTOMOGRAFIE**
METHOD AND X-RAY COMPUTER TOMOGRAPH FOR THE NON-DESTRUCTIVE TESTING OF OBJECTS CONSTRUCTED FROM MATERIAL LAYERS BY MEANS OF X-RAY COMPUTER TOMOGRAPHY
PROCÉDÉ ET TOMODENSITOMÉTRE POUR LE CONTRÔLE NON DESTRUCTIF D'OBJETS MULTI-COUCHES, À L'AIDE DE LA TOMODENSITOMÉTRIE ASSISTÉE PAR ORDINATEUR AUX RAYONS X

(30) Priorität: 10.09.2008 DE 102008046698
(43) Veröffentlichungstag der Anmeldung: 22.06.2011
(73) Patentinhaber: Fraunhofer-Gesellschaft zur Förderung der angewandten Forschung e.V., 80686 München (DE)
(72) Erfinder: HASSLER, Ulf, 91560 Heilsbronn (DE); REHAK, Markus, 90613 Großhabersdorf (DE)
(74) Vertreter: Rau, Schneck & Hübner Patentanwälte Rechtsanwälte PartGmbB
(86) Internationale Anmeldenummer: PCT/EP2009/006476
(87) Internationale Veröffentlichungsnummer: WO 2010/028789

(56) Entgegenhaltungen:
- WO-A-02/46729
- US-A- 6 028 910
- US-B1- 6 442 288
- ULF HASSLER ET AL: "Röntgenprüfung an genähten CFK- Preformteilen" INTERNET CITATION, [Online] 1. Januar 2007 (2007-01-01), Seiten 1-10, XP007910680 Gefunden im Internet: URL:http://www.ndt.net/article/dgzfp07/Inh alt/v22.pdf> [gefunden am 2009-12-07]
- HASSLER U ET AL: "Computed tomography for analysis of fibre distribution in carbon fibre preforms" INSIGHT: NON-DESTRUCTIVE TESTING AND CONDITION MONITORING JUNE 2008 BRITISH INSTITUTE OF NON-DESTRUCTIVE TESTING GB, Bd. 50, Nr. 6, Juni 2008 (2008-06), Seiten 312-315, XP002560085
- BADEL P ET AL: "Simulation and tomography analysis of textile composite reinforcement deformation at the mesoscopic scale" COMPOSITES SCIENCE AND TECHNOLOGY, ELSEVIER, UK, Bd. 68, Nr. 12, 1. September 2008 (2008-09-01), Seiten 2433-2440, XP025431658 ISSN: 0266-3538 [gefunden am 2008-05-07]

## Beschreibung

Die Erfindung betrifft ein Verfahren und einen Röntgencomputertomografen zur zerstörungsfreien Prüfung von aus Materiallagen aufgebauten Objekten mittels Röntgencomputertomografie.

Faserverbundbauteile gewinnen aufgrund ihrer Gewichts- und Festigkeitseigenschaften in der Luft- und Raumfahrtindustrie sowie in der Automobilindustrie zunehmend an Bedeutung. Die Herstellung von Faserverbundbauteilen erfolgt derart, dass mehrere als Faserlagen ausgebildete Materiallagen übereinander zu so genannten Preformen angeordnet werden, die dann in einer Form mit Harz infiltriert und unter Druck und Wärme zu den Faserverbundbauteilen ausgehärtet werden. Die Preformen bestehen typischerweise aus 4 bis 32 aufeinander geschichteten einzelnen Faserlagen, wobei jede Faserlage eine individuelle Ausrichtung aufweist. Die einzelnen Faserlagen bestehen beispielsweise aus miteinander verwebten oder schichtweise miteinander vernähten Faserbündeln, wobei die Faserbündel in der Regel zwei um 90° zueinander verdrehte Ausrichtungen aufweisen. Die verwebten Faserbündel werden als Fasergewebe und die vernähten Faserbündel als Fasergelege bezeichnet. Die Faserbündel haben in der Faserlage eine Querschnittsfläche von typischerweise 0,1 mm x 5 mm und bestehen aus mehreren tausend einzelnen Kohle- und/oder Glasfasern.

Die Bauformen von Faserverbundbauteilen werden zunehmend komplex, wodurch auch deren Herstellungskosten zunehmen. Preformen für tragende Verkleidungsbauteile können beispielsweise mehrere Quadratmeter groß sein. Optisch zugänglich sind jeweils nur die beiden äußeren Faserlagen.

Aufgrund der hohen Herstellungskosten besteht seitens der Industrie ein Bedarf den Aufbau von Faserverbundbauteilen zu verschiedenen Zeitpunkten der Herstellung zerstörungsfrei überprüfen zu können, um erforderliche Korrekturen frühstmöglich vornehmen zu können, so dass aufwendige nachfolgende Korrekturerarbeitungsschritte verhindert werden können.

Aus dem Fachartikel "Röntgenprüfung an genähten CFK-Preformteilen" von Ulf Hassler et al. ist bekannt, Preformen mittels Röntgenstrahlung zerstörungsfrei zu prüfen. Die aus mehreren Materiallagen aufgebauten Preformen werden mittels eines Röntgencomputertomografen untersucht und schichtweise rekonstruiert. Nachteilig hierbei ist, dass die Strukturrichtung der jeweiligen Materiallage aufgrund der geringen Kontraste in den rekonstruierten Schichten kaum erkennbar ist.

Der Erfindung liegt daher die Aufgabe zugrunde, ein Verfahren zu schaffen, das eine zerstörungsfreie Prüfung von aus Materiallagen aufgebauten Objekten und insbesondere eine Erkennung der Strukturrichtungen der Materiallagen mittels Röntgencomputertomografie ermöglicht.

Diese Aufgabe wird durch ein Verfahren mit den Merkmalen des Anspruchs 1 gelöst. Erfindungsgemäß wurde erkannt, dass die Absorption der Röntgenstrahlung für die einzelnen Materiallagen eine Vorzugsrichtung aufweist, die im Wesentlichen parallel zu der x-y-Ebene verläuft und eine feste und bekannte Abhängigkeit zu der Strukturrichtung der jeweiligen Materiallage hat. Dadurch, dass die Strukturrichtung und die Vorzugsrichtung in einer festen Abhängigkeit zueinander stehen, kann durch das Ermitteln der Vorzugsrichtung auch die zugehörige Strukturrichtung ermittelt werden. Die Vorzugsrichtungen der Materiallagen werden derart ermittelt, dass aus den Objektdaten entlang von mehreren parallel zu der x-y-Ebene verlaufenden Auswerterichtungen und an mehreren Positionen in z-Richtung Grauwertverläufe und zugehörige Gradientenverläufe ermittelt werden. Aus den Gradientenverläufen ist einfach und zuverlässig für jede z-Position zu erkennen, welche der Auswerterichtungen der jeweiligen Vorzugsrichtung entspricht. Aus den Vorzugsrichtungen und den zugehörigen Positionen in z-Richtung kann auf die Anzahl der Materiallagen, die jeweilige Strukturrichtung der Materiallagen, die Reihenfolge der Material-lagen, die Dicke der Materiallagen in z-Richtung sowie die Position der Materiallagen in z-Richtung geschlossen werden. Das zu prüfende Objekt kann somit jederzeit im Ganzen oder in Teilen, beispielsweise in Form von zylinderförmigen oder quaderförmigen Parzellen, zerstörungsfrei hinsichtlich des Aufbaus und der Materiallagen überprüft werden.

Sind die Materiallagen beispielsweise als Faserlagen ausgebildet, die paarweise miteinander zu Fasergelegen vernäht sind, so entstehen aufgrund der Vernähung der einzelnen Faserbündel schlitzförmige Nahtspalte, die bei der Durchstrahlung mit Röntgenstrahlung einen messbaren Kontrast ergeben. Die Richtung der Nahtspalte entspricht der Richtung der Faserbündel, die auch die Strukturrichtung der jeweiligen Faserlage darstellt. Die Absorption der Röntgenstrahlung nimmt entlang einer Richtung, die senkrecht zu der Strukturrichtung der jeweiligen Faserlage verläuft, an den Nahtspalten sprunghaft ab, was im Gradientenverlauf eines Grauwertverlaufs entlang dieser Richtung deutlich zu erkennen ist. Dementsprechend stellt die Richtung senkrecht zu der Strukturrichtung für die Absorption der Röntgenstrahlung eine Vorzugsrichtung dar, die um 90° zu der zugehörigen Strukturrichtung verdreht ist. Die Gradientenverläufe zu den Grauwertverläufen entlang der Auswerterichtungen sind somit abhängig von dem Winkel zwischen der zugehörigen Auswerterichtung und der Strukturrichtung sowie von dem Abstand des jeweiligen Grauwertverlaufs in z-Richtung zu dem Nahtspalt. Die Werte eines Gradientenverlaufs werden dementsprechend genau dann maximal, wenn die Auswerterichtung des zugehörigen Grauwertverlaufs senkrecht zu der Strukturrichtung ist und der Grauwertverlauf den Nahtspalt schneidet, d.h. der Abstand des Grauwertverlaufs zu dem Nahtspalt in z-Richtung minimal ist. Die Auswertung der Faserlagen sowie deren Strukturrichtung wird somit auf die Bestimmung derjenigen Grauwertverläufe zurückgeführt, die die höchsten Werte in den zugehörigen Gradientenverläufen aufweisen. Diese Grauwertverläufe weisen dementsprechend eine senkrecht zu der jeweiligen Strukturrichtung verlaufende Auswerterichtung und einen minimalen Abstand in z-Richtung zu dem Nahtspalt und somit zu der zugehörigen Faserlage auf. Das Verfahren kann zu beliebigen Zeitpunkten bei der Herstellung von Faserverbundbauteilen verwendet werden, um die jeweiligen Ergebnisse der Herstellungsschritte zerstörungsfrei zu überprüfen.

Eine Weiterbildung nach Anspruch 2 ermöglicht das Ermitteln von Projektionsdaten von flächig ausgedehnten Objekten, wie beispielsweise von Preformen. Beim Ermitteln der Projektionsdaten kann entweder das Objekt fest sein und die Röntgenquelle sowie der Röntgendetektor bewegt werden oder die Röntgenquelle sowie der Röntgendetektor fest sein und das Objekt bewegt werden. Entscheidend ist die Relativbewegung.

Ein Verfahren nach Anspruch 3 ermöglicht ein einfaches schichtweises Rekonstruieren von Objektdaten aus den Projektionsdaten. Ein derartiges Ermitteln von Projektionsdaten ist auch als zirkuläre Röntgen-Tomosynthese bekannt. Bei der zirkulären Röntgen-Tomosynthese werden in einfacher Weise Projektionsdaten aus verschiedenen Projektionswinkeln gewonnen, wobei beim schichtweisen Rekonstruieren der Objektdaten ein Verwischungseffekt eintritt, durch den die Unschärfe der Materiallagen mit dem Abstand zu der abgebildeten Schicht des Objekts zunimmt. Somit wird nur die abgebildete Schicht scharf dargestellt, wohingegen das Objekt außerhalb dieser Schicht mit zunehmendem Abstand zu der abgebildeten Schicht unscharf dargestellt wird. Beim Ermitteln der Projektionsdaten kann entweder das Objekt fest sein und die Röntgenquelle sowie der Röntgendetektor bewegt werden oder die Röntgenquelle sowie der Röntgendetektor fest sein und das Objekt bewegt werden. Entscheidend ist die Relativbewegung.

Ein Verfahren nach Anspruch 4 ermöglicht ein einfaches schichtweises Rekonstruieren von Objektdaten aus den Projektionsdaten. Ein derartiges Ermitteln von Projektionsdaten ist auch als lineare Röntgen-Tomosynthese bekannt. Bei der linearen Röntgen-Tomosynthese werden in einfacher Weise Projektionsdaten aus verschiedenen Projektionswinkeln gewonnen, wobei beim schichtweisen Rekonstruieren der Objektdaten ein Verwischungseffekt eintritt, durch den die Unschärfe der Materiallagen mit dem Abstand zu der abgebildeten Schicht des Objekts zunimmt. Somit wird nur die abgebildete Schicht scharf dargestellt, wohingegen das Objekt außerhalb dieser Schicht mit zunehmendem Abstand zu der abgebildeten Schicht unscharf dargestellt wird. Die lineare Röntgen-Tomosynthese ist insbesondere für länglich ausgebildete Objekte oder für Objekte mit senkrecht zur Aufnahmerichtung orientierter Struktur geeignet.

Eine Weiterbildung nach Anspruch 5 ermöglicht ein einfaches Auswerten der Objektdaten. Dadurch, dass das Objekt schichtweise aus den Materiallagen aufgebaut ist und die Objektdaten in Form einer Mehrzahl von zweidimensionalen Schichtdatensätzen vorliegen, entsprechen die Schichtdatensätze im wesentlichen parallel zu den Materiallagen verlaufenden Schichten des Objektes. Dadurch, dass Schichtdatensätze an einer Vielzahl von Positionen in z-Richtung vorliegen, können die Materiallagen sukzessive untersucht werden. Besonders vorteilhaft ist ein derartiges Rekonstruieren, wenn die Projektionsdaten mittels zirkulärer oder linearer Röntgen-Tomosynthese gewonnen wurden, da aufgrund der Röntgen-Tomosynthese bei dem schichtweisen Rekonstruieren ein Verwischungseffekt eintritt. Durch diesen Verwischungseffekt werden Materiallagen mit zunehmendem Abstand von der rekonstruierten Schicht zunehmend unscharf abgebildet, was umgekehrt bedeutet, dass die der rekonstruierten Schicht zugehörige Materiallage im Vergleich zu den übrigen Materiallagen scharf dargestellt wird.

Ein Verfahren nach Anspruch 6 gewährleistet ein sicheres Auffinden der Vorzugsrichtung und somit der Strukturrichtung. Beträgt der Winkelbereich mehr als 180°, können Randeffekte beim Auswerten der Grauwertverläufe und/oder Gradientenverläufe, beispielsweise bei einer Filterung, vermieden werden.

Eine Weiterbildung nach Anspruch 7 gewährleistet ein optimales Auswerten der Gradientenverläufe. Wenn die Auswerterichtungen für die Schichtdatensätze jeweils durch den Mittelpunkt der abgebildeten Schicht verlaufen, ist sichergestellt, dass die Grauwertverläufe zumindest eine annähernd gleiche Länge aufweisen. Die Grauwertverläufe sowie die daraus ermittelten Gradientenverläufe stellen somit eine zuverlässige Grundlage für das Auswerten der Schichtdatensätze dar. Die abgebildeten Schichten können hierbei Schichten des Objekts im Ganzen sein oder Schichten eines Teils des Objektes, wie beispielsweise einer zylinderförmigen oder quaderförmigen Parzelle.

Ein Verfahren nach Anspruch 8 erhöht die Zuverlässigkeit beim Ermitteln der Vorzugsrichtung. Sind die Materiallagen beispielsweise als Faserlagen ausgebildet, so stellt das Berechnen eines gemittelten Grauwertverlaufs sicher, dass dieser Informationen eines Nahtspalts enthält, der von einem der Grauwertverläufe gekreuzt wird.

Eine Weiterbildung nach Anspruch 9 ermöglicht ein effektives Auswerten der Gradientenverläufe. Dadurch, dass für jeden Gradientenverlauf ein Gradientenwert ermittelt wird, wird die in dem Gradientenverlauf enthaltene Information in Bezug auf Extremwerte komprimiert.

Eine Weiterbildung nach Anspruch 10 ermöglicht ein einfaches und effektives Auswerten der Gradientenverläufe.

Ein Verfahren nach Anspruch 11 ermöglicht ein einfaches Prüfen der Materiallagen des Objektes. Das zweidimensionale Gradientenfeld stellt die relevanten Gradientenwerte in Abhängigkeit von der Position in z-Richtung und der Auswerterichtung übersichtlich dar, sodass aus dem Gradientenfeld unmittelbar die Materiallagen ausgewertet und geprüft werden können. Insbesondere kann das Gradientenfeld mit einem Soll-Gradientenfeld verglichen werden, sodass Abweichungen im Aufbau des Objektes von einem Soll-Aufbau schnell und einfach erkannt werden können.

Eine Weiterbildung nach Anspruch 12 erleichtert das Auswerten des Gradientenfelds. Durch eine Filterung des Gradientenfelds kann die relevante Information in Bezug auf die Materiallagen gezielt hervorgehoben werden. Beispielsweise kann durch eine Gauss-Filterung Rauschen unterdrückt werden und durch eine LOG-Filterung (Laplacian of Gaussian) lokale Maxima angehoben werden. Weiterhin können bestimmte Winkelbereiche der Auswerterichtungen hervorgehoben werden. Derartige Winkelbereiche können aus Vorabinformationen über den Aufbau des Objektes bekannt sein. Bei einer Filterung ist insbesondere vorteilhaft, wenn die Auswerterichtungen sich über einen Winkelbereich von mehr als 180° erstrecken, da hierdurch Randeffekte bei der Filterung vermieden werden können.

Eine Weiterbildung nach Anspruch 13 erleichtert das Auswerten des Gradientenfeldes.

Ein Verfahren nach Anspruch 14 ermöglicht das Bereitstellen von allen relevanten Merkmalen der Materiallagen, so dass eine umfassende und zuverlässige Prüfung des Objektes sichergestellt ist.

Der Erfindung liegt ferner die Aufgabe zugrunde, einen Röntgencomputertomografen zu schaffen, der eine zerstörungsfreie Prüfung von aus Materiallagen aufgebauten Objekten und insbesondere eine Erkennung der Strukturrichtung der Materiallagen mittels Röntgencomputertomografie ermöglicht.

Diese Aufgabe wird durch einen Röntgencomputertomografen mit den Merkmalen des Anspruchs 15 gelöst. Die Vorteile des erfindungsgemäßen Röntgencomputertomografen entsprechen den bereits beschriebenen Vorteilen des erfindungsgemäßen Verfahrens.

Weitere Merkmale und Vorteile der Erfindung ergeben sich aus der Beschreibung mehrerer Ausführungsbeispiele anhand der Zeichnung. Es zeigen:
- Figur 1: eine perspektivische Schemadarstellung eines Röntgencomputertomografen gemäß einem ersten Ausführungsbeispiel,
- Figur 2: eine perspektivische Schemadarstellung eines zu prüfenden und aus mehreren Materiallagen aufgebauten Objektes,
- Figur 3: eine ausschnittsweise schematische Draufsicht auf zwei der in Figur 2 dargestellten Materiallagen,
- Figur 4: eine schematische Darstellung einer rekonstruierten Schicht einer der in Figur 2 dargestellten Materiallagen mit einer Strukturrichtung und mehreren Auswerterichtungen,
- Figur 5: ein Diagramm eines ersten Grauwertverlaufs der rekonstruierten Schicht entlang einer ersten und nicht senkrecht zu einer Strukturrichtung verlaufenden Auswerterichtung,
- Figur 6: ein Diagramm eines zweiten Grauwertverlaufs der rekonstruierten Schicht entlang einer zweiten und senkrecht zu der Strukturrichtung verlaufenden Auswertrichtung,
- Figur 7: ein Diagramm eines Gradientenverlaufs zu dem Grauwertverlauf gemäß Figur 6,
- Figur 8: ein Diagramm eines Gradientenfeldes über mehrere rekonstruierte Schichten und über mehrere Auswerterichtungen, und
- Figur 9: eine perspektivische Schemadarstellung eines Röntgencomputertomografen gemäß einem zweiten Ausführungsbeispiel.

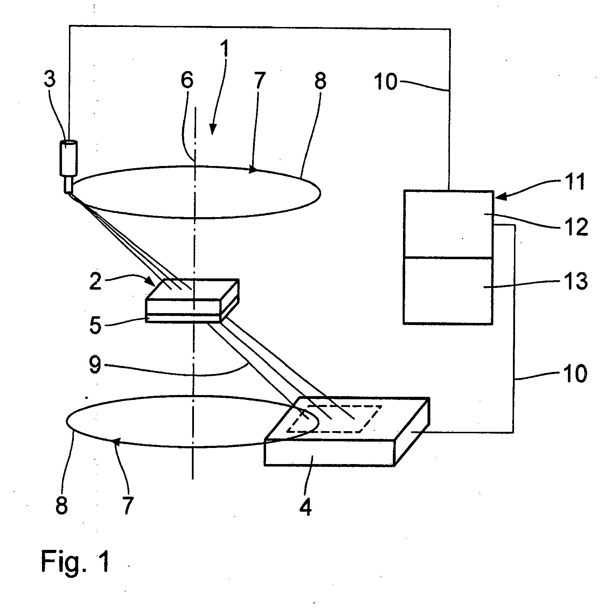

Nachfolgend wird unter Bezugnahme auf die Figuren 1 bis 8 ein erstes Ausführungsbeispiel der Erfindung beschrieben.

Ein Röntgencomputertomograf 1 weist zur zerstörungsfreien Prüfung eines Objektes 2 eine Röntgenquelle 3 und einen zugehörigen Röntgendetektor 4 auf. Zwischen der Röntgenquelle 3 und dem Röntgendetektor 4 ist ein Objektträger 5 angeordnet, der zum Aufnehmen des Objektes 2 dient.

Der Objektträger 5 erstreckt sich im Wesentlichen in einer x-Richtung und einer senkrecht dazu verlaufenden y-Richtung, wobei diese zusammen eine x-y-Ebene E definieren. Der Röntgencomputertomograf 1 weist mittig zu dem Objektträger 5 eine Mittellängsachse 6 auf, die parallel zu einer z-Richtung und senkrecht zu der x-y-Ebene E verläuft. Die Röntgenquelle 3 und der Röntgendetektor 4 sind relativ zu dem Objekt 2 in gleichen Bewegungsrichtungen 7 phasenverschoben auf konzentrisch zu der Mittellängsachse 6 verlaufenden Kreisbahnen 8 und parallel zu der x-y-Ebene E bewegbar. Die Phasenverschiebung zwischen der Röntgenquelle 3 und dem Röntgendetektor 4 beträgt 180°.

Die Röntgenquelle 3 dient zum Bestrahlen des zu prüfenden Objektes 2 mit einer in Richtung des Objektes 2 kegelförmig austretenden Röntgenstrahlung 9. Die Röntgenquelle 3 ist beispielsweise als Röntgenröhre ausgebildet, deren Aufbau bekannt ist. Der Röntgendetektor 4 dient zum Ermitteln von Projektionsdaten des Objektes 2 aus der nach dem Bestrahlen des Objektes 2 detektierten Röntgenstrahlung 9. Der Röntgendetektor 4 erstreckt sich im Wesentlichen parallel zu der x-y-Ebene E und weist in x- sowie y-Richtung eine Vielzahl von Pixeln auf. Der Röntgendetektor 4 ist beispielsweise als Flachbilddetektor ausgebildet, dessen Aufbau bekannt ist.

Die Röntgenquelle 3 und der Röntgendetektor 4 sind über Signalleitungen 10 mit einer Recheneinrichtung 11 verbunden. Die Recheneinrichtung 11 dient zur Steuerung der Röntgenquelle 3 sowie zur Auswertung der mittels des Röntgendetektors 4 detektierten Röntgenstrahlung 9. Die Recheneinrichtung 11 weist eine Rekonstruktionseinheit 12 auf. Mittels der Rekonstruktionseinheit 12 sind aus den Projektionsdaten Objektdaten rekonstruierbar, die zumindest einen Teil des Objektes 2 digital abbilden. Weiterhin weist die Recheneinrichtung 11 eine Auswerteeinheit 13 auf, die zum Auswerten der rekonstruierten Objektdaten dient.

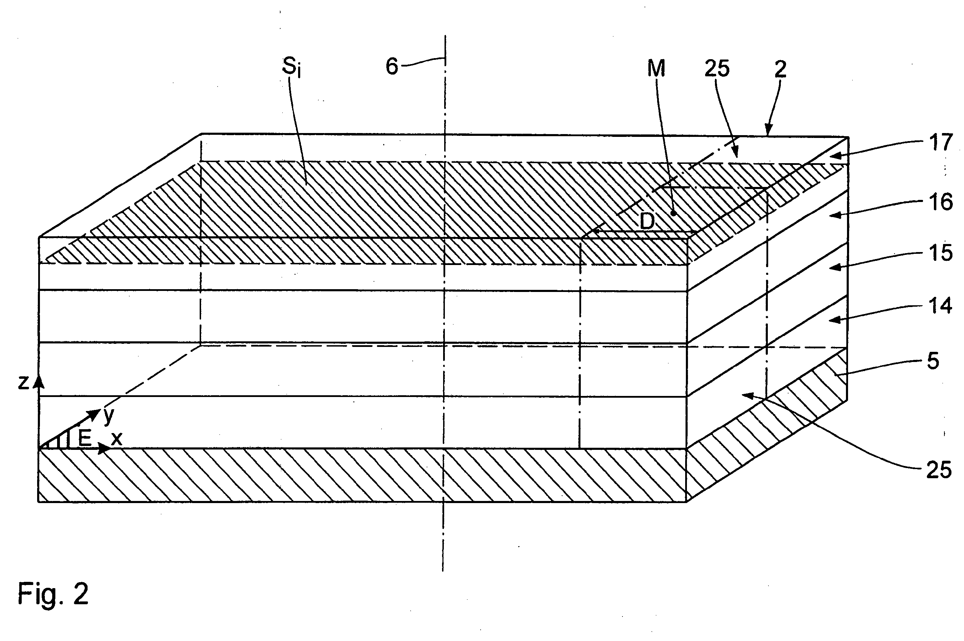

Das zu prüfende Objekt 2 ist - wie aus Figur 2 ersichtlich - aus vier Materiallagen aufgebaut, die im Einzelnen ausgehend von dem Objektträger 5 in z-Richtung mit den Bezugszeichen 14 bis 17 bezeichnet sind. Die Materiallagen 14 bis 17 erstrecken sich im Wesentlichen parallel zu der x-y-Ebene E und sind in der z-Richtung schichtweise übereinander angeordnet. Die Materiallagen 14 bis 17 sind als Faserlagen ausgebildet und werden dementsprechend nachfolgend als Faserlagen 14 bis 17 bezeichnet.

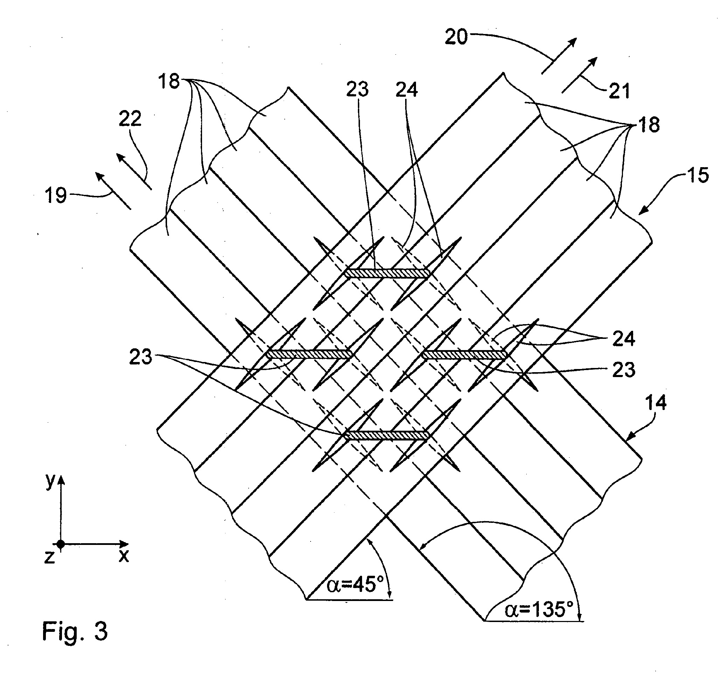

Figur 3 zeigt eine ausschnittsweise Draufsicht auf die Faserlagen 14 und 15. Die Faserlagen 14 und 15 sind aus Faserbündeln 18 aufgebaut, die beispielsweise aus einer Vielzahl von Kohlefasern und/oder Glasfasern bestehen. Die Faserbündel 18 der ersten Faserlage 14 sind relativ zu der x-Richtung in einem Winkel α von 135° ausgerichtet. Demgegenüber sind die Faserbündel 18 der zweiten Faserlage 15 um 90° verdreht, sodass die Faserbündel 18 relativ zu der x-Richtung in einem Winkel α von 45° ausgerichtet sind. Die Ausrichtung der Faserbündel 18 definiert für jede Faserlage 14 bis 17 eine jeweilige Strukturrichtung, wobei die Strukturrichtungen der einzelnen Faserlagen 14 bis 17 mit den Bezugszeichen 19 bis 22 bezeichnet sind. Die Strukturrichtungen 21 und 22 der Faserlagen 16 und 17 sind ebenfalls in Figur 3 dargestellt, wobei die Strukturrichtung 21 der dritten Faserlage 16 im Wesentlichen parallel zu der Strukturrichtung 20 und die Strukturrichtung 22 der vierten Faserlage 17 im Wesentlichen parallel zu der Strukturrichtung 19 verläuft. Jede der Faserlagen 14 bis 17 weist somit eine im Wesentlichen parallel zu der x-y-Ebene E verlaufende Strukturrichtung 19 bis 22 auf.

Die Faserlagen 14 bis 17 sind als Fasergelege ausgebildet und paarweise durch parallel zu der x-Richtung verlaufende Nähte 23 miteinander vernäht. Durch die Nähte 23 weisen die Faserlagen 14 bis 17 jeweils schlitzförmige Nahtspalte 24 auf, die auch als Nahtstichlöcher bezeichnet werden. Die Nahtspalte 24 erstrecken sich aufgrund des Aufbaus der Faserbündel 18 aus einzelnen Kohlefasern und/oder Glasfasern in der jeweiligen Strukturrichtung 19 bis 22 der Faserlagen 14 bis 17.

Nachfolgend wird die zerstörungsfreie Prüfung des Objektes 2 beschrieben. Das Objekt 2 wird auf dem Objektträger 5 angeordnet, wobei die Faserlagen 14 bis 17 sich im Wesentlichen parallel zu der x-y-Ebene E erstrecken. Mittels der Röntgenquelle 3 wird das Objekt 2 mit Röntgenstrahlung 9 bestrahlt. Der Röntgendetektor 4 detektiert die auf ihn treffende Röntgenstrahlung 9, wobei für jedes Pixel die detektierte Röntgenstrahlung 9 in einen entsprechenden Grauwert gewandelt und zur Auswertung an die Recheneinrichtung 11 übertragen werden. Die Röntgenquelle 3 und der Röntgendetektor 4 werden während des Bestrahlens mit Röntgenstrahlung 9 um 180° phasenverschoben in den Bewegungsrichtungen 7 auf den zugehörigen Kreisbahnen 8 bewegt, so dass der Röntgendetektor 4 Projektionsdaten in Form von Grauwerten aus einer Vielzahl von Projektionswinkeln an die Recheneinrichtung 11 überträgt. Ein derartiges Bewegen der Röntgenquelle 3 und des Röntgendetektors 4 während des Bestrahlens mit Röntgenstrahlung 9 ist auch als zirkuläre Röntgen-Tomosynthese bekännt.

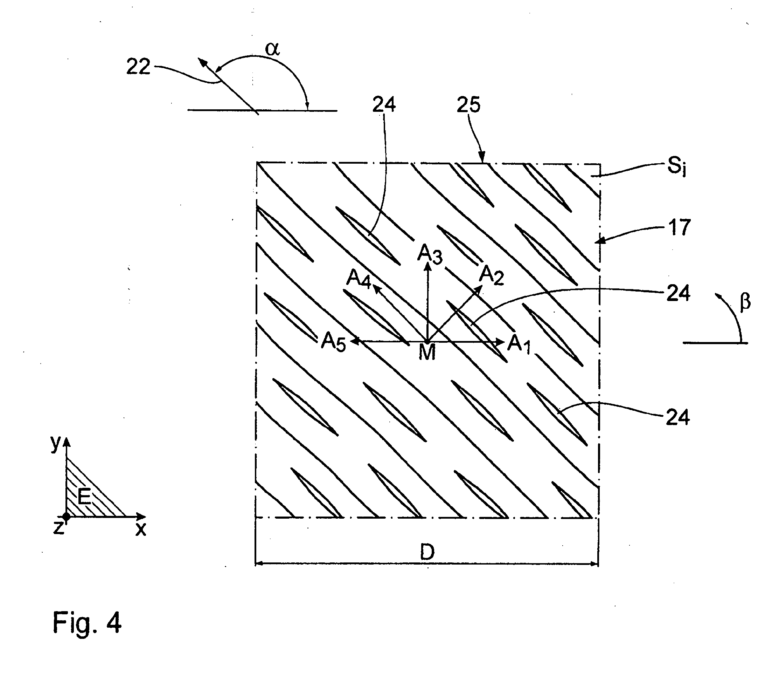

Mittels der Rekonstruktionseinheit 12 werden aus den Projektionsdaten Objektdaten rekonstruiert, die das Objekt 2 in dreidimensionaler Form digital abbilden. Die Objektdaten werden in Form von einer Mehrzahl von zweidimensionalen Schichtdatensätzen rekonstruiert, wobei die Schichtdatensätze jeweils eine parallel zu der x-y-Ebene E verlaufende Schicht Sᵢ mit i = 1 bis Nₛ des Objektes 2 an einer zugehörigen Position i in z-Richtung abbilden. In den Figuren 2 und 4 ist beispielhaft eine abgebildete Schicht Sᵢ dargestellt.

Die Schichtdatensätze werden der Auswerteeinheit 13 übermittelt. In der Auswerteeinheit 13 können die Schichtdatensätze entweder für das Objekt 2 im Ganzen oder für einen Teil des Objektes 2 ausgewertet werden. Nachfolgend wird das Auswerten der Schichtdatensätze für eine von mehreren Parzellen 25 des Objektes 2 beschrieben. Die Größe und die Lage der Parzellen 25 werden derart gewählt, dass in jeder der Faserlagen 14 bis 17 mindestens ein Nahtspalt 24 enthalten ist. Die Parzelle 25 weist einen Mittelpunkt M und einen Durchmesser D in Pixeln auf. Die Parzelle 25 kann beispielsweise quaderförmig oder zylinderförmig ausgebildet sein. Das Auswerten der Schichtdatensätze für das Objekt 2 im Ganzen erfolgt in entsprechender Weise, wie nachfolgend beschrieben ist.

Die den Schichtdatensätzen entsprechenden Schichten Sᵢ sind parallel zueinander und verlaufen in Höhe von unterschiedlichen Positionen i in z-Richtung durch die Faserlagen 14 bis 17. Der Index i entspricht der Position in der z-Richtung der rekonstruierten Schicht Sᵢ. Aufgrund der zirkulären Röntgen-Tomosynthese haben die rekonstruierten Schichten Sᵢ die Eigenschaft, dass das Objekt 2 an der der Schicht Sᵢ entsprechenden Positionen i in z-Richtung scharf abgebildet wird, wohingegen das Objekt 2 außerhalb dieser Schicht Sᵢ in Abhängigkeit des Abstandes in z-Richtung von dieser Schicht Sᵢ unscharf abgebildet wird.

In der Auswerteeinheit 13 werden zunächst für die Parzelle 25 Auswerterichtungen Aⱼ mit j = 1 bis N_{w} bestimmt. Die Auswerterichtungen Aⱼ sind in Figur 4 für die rekonstruierte Schicht Sᵢ durch die Faserlage 17 veranschaulicht. Die Auswerterichtungen Aⱼ werden in äquidistanten Winkelabständen über einen Winkelbereich von 180° verteilt. In Figur 4 sind fünf Auswerterichtungen A₁ bis A₅ dargestellt, die relativ zu der x-Richtung Winkel ß von 0°, 45°, 90°, 135° und 180° aufweisen. Die Auswerterichtungen Aⱼ verlaufen durch den Mittelpunkt M der Parzelle 25 in der abgebildeten Schicht Sᵢ. Alternativ können die Auswerterichtungen Aⱼ einen Winkelbereich von mehr als 180°, insbesondere von mehr als 190°, und insbesondere von mehr als 200°, überdecken, was in Bezug auf das weitere Auswerten der Schichtdatensätze vorteilhaft ist.

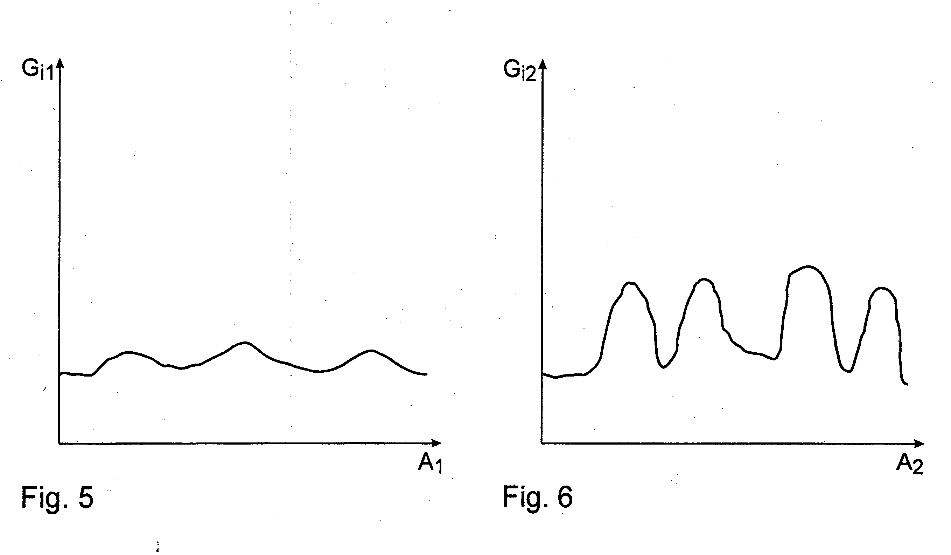

Für jede der abgebildeten Schichten Sᵢ und für jede der Auswerterichtungen Aⱼ wird aus dem jeweils zugehörigen Schichtdatensatz entlang der Auswerterichtungen Aⱼ zugehörige Grauwertverläufe Gᵢⱼ extrahiert. Die Figuren 5 und 6 zeigen beispielhaft die Grauwertverläufe Gᵢ₁ und Gᵢ₂ der Schicht Sᵢ zu den Auswerterichtungen A₁ und A₂. Alternativ kann für jede der Auswerterichtungen Aⱼ ein gemittelter Grauwertverlauf durch Mittelung von mehreren benachbart angeordneten und in der jeweiligen Auswerterichtung Aⱼ verlaufenden Grauwertverläufen ermittelt werden.

Der Auswertung liegt die Erkenntnis zugrunde, dass ein Gradientenverlauf Rᵢⱼ zu einem Grauwertverlauf Gᵢⱼ abhängig ist von dem Winkel zwischen der Auswerterichtung Aⱼ und der jeweiligen Strukturrichtung 19 bis 22 sowie dem Abstand der abgebildeten Faserlagen 14 bis 17, insbesondere deren Nahtspalte 24, in z-Richtung von der jeweils rekonstruierten Schicht Sᵢ. Dies bedeutet, dass die Werte des Gradientenverlaufs Rᵢⱼ genau dann maximal werden, wenn die Auswerterichtung Aⱼ senkrecht zu der jeweiligen Strukturrichtung 19 bis 22 ausgerichtet ist, also α - β = 90° ist und die rekonstruierte Schicht Sᵢ in z-Richtung in der jeweiligen Faserlage 14 bis 17 liegt, also der Abstand der Nahtspalte 24 der jeweiligen Faserlage 14 bis 17 zu der rekonstruierten Schicht Sᵢ minimal ist.

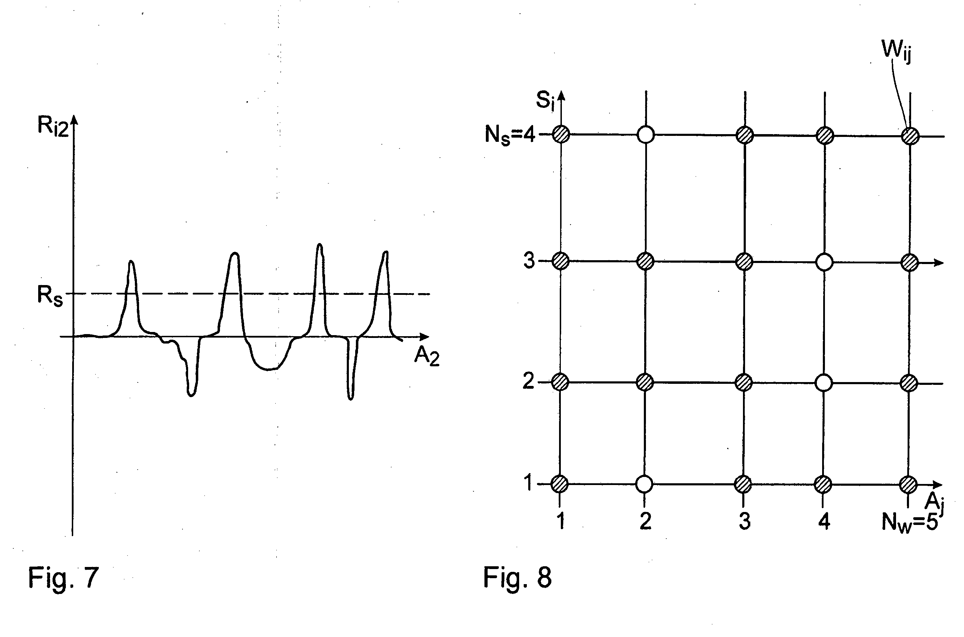

Figur 4 zeigt, dass die Auswerterichtung A₂ senkrecht zu der Strukturrichtung 22 und die dargestellte Schicht Si an einer entsprechenden Position i in z-Richtung direkt durch die Nahtspalte 24 der vierten Faserlage 17 verläuft, also der Abstand zwischen der rekonstruierten Schicht Sᵢ zu den Nahtspalten 24 in z-Richtung minimal ist. Dementsprechend weist der in Figur 6 dargestellte Grauwertverlauf Gᵢ₂ an den Nahtspalten 24 hohe Grauwertunterschiede auf. Demgegenüber verläuft die Auswerterichtung A₁ des Grauwertverlaufs Gᵢ₁ nicht senkrecht zu der Strukturrichtung 22, wodurch die Grauwertunterschiede an den Nahtspalten 24 deutlich geringer ausfallen. Die Auswertung der Faserlagen 14 bis 17 wird also zurückgeführt auf die Bestimmung derjenigen Grauwertverläufe Gᵢⱼ deren Auswerterichtungen Aⱼ senkrecht zu der jeweiligen Strukturrichtung 19 bis 22 verlaufen und die sich an einer Position i in z-Richtung befinden, die der Position der jeweiligen Faserlage 14 bis 17 in der z-Richtung entspricht. Die Richtung senkrecht zu der jeweiligen Strukturrichtung 19 bis 22 stellt dementsprechend eine Vorzugsrichtung für die Absorption der Röntgenstrahlung 9 dar, da in dieser Richtung die Grauwertunterschiede an den Nahtspalten 24 maximal werden. Dementsprechend wird für jeden Grauwertverlauf Gᵢⱼ ein zugehöriger Gradientenverlauf Rᵢⱼ ermittelt, in dem die Grauwertunterschiede deutlich zu erkennen und somit einfach auszuwerten sind. Figur 7 zeigt beispielhaft den Gradientenverlauf Rᵢ₂ zu dem Grauwertverlauf Gᵢ₂.

Zu jedem Gradientenverlauf Rᵢⱼ wird ein Gradientenwert Wᵢⱼ ermittelt, der ein Maß für die Extremwerte in dem Gradientenverlauf Rᵢⱼ ist. Der Gradientenwert Wᵢⱼ wird derart ermittelt, dass der Gradientenverlauf Rᵢⱼ mit einem Gradientenschwellwert Rₛ verglichen wird und alle Werte des Gradientenverlaufs Rᵢⱼ, die den Gradientenschwellwert Rₛ überschreiten zu dem Gradientenwert Wᵢⱼ aufsummiert werden. Figur 7 veranschaulicht die Berechnung des Gradientenwertes Wᵢ₂ für den Gradientenverlauf Rᵢ₂.

Alle Gradientenwerte Wᵢⱼ werden in Abhängigkeit der Position i bzw. der Schicht Sᵢ in z-Richtung und der Auswerterichtung Aⱼ in einem Gradienten feld dargestellt. Figur 8 veranschaulicht beispielhaft ein Gradientenfeld für vier Schichten Sᵢ mit i = 1 bis 4 und für fünf Auswerterichtungen Aⱼ mit j = 1 bis 5, wie in den Figuren 2 und 4 gezeigt ist. Die Gradientenwerte Wᵢⱼ sind in Abhängigkeit ihres Wertes heller oder dunkler dargestellt, wobei höhere Gradientenwerte Wᵢⱼ heller dargestellt sind als niedrigere. Wie aus Figur 8 ersichtlich ist, treten die Auswerterichtungen Aⱼ in dem Gradientenfeld hervor, die in der jeweiligen Schicht Sᵢ senkrecht zu der jeweiligen Strukturrichtung 19 bis 22 verlaufen. Das Gradientenfeld kann in einfacher Weise hinsichtlich der Anzahl der Faserlagen 14 bis 17, der zugehörigen Strukturrichtungen 19 bis 22, der Reihenfolge der Faserlagen 14 bis 17, der Dicke und Position der Faserlagen 14 bis 17 in z-Richtung ausgewertet werden, in dem die Positionen der hervortretenden Gradientenwerte Wᵢⱼ in dem Gradientenfeld analysiert werden. Um die Analyse der in dem Gradientenfeld hervortretenden Gradientenwerte Wᵢⱼ zu vereinfachen, kann das Gradientenfeld zusätzlich einer Filterung und/oder Binarisierung unterzogen werden. Es kann beispielsweise eine Gauss-Filterung zur Unterdrückung von Rauschen, eine LOG-Filterung (Laplacian of Gaussian) zur Anhebung von lokalen Maxima und/oder eine Filterung zur Hervorhebung bestimmter Winkelbereiche der Auswerterichtungen Aⱼ zur Korrektur von nicht gleich verteilten Nahtspalteigenschaften durchgeführt werden. Um unerwünschte Randeffekte bei einer Filterung zu vermeiden, ist es vorteilhaft, wenn die Auswerterichtungen Aⱼ bei einer Filterung einen Winkelbereich von mehr als 180° überdecken.

Bei der Binarisierung werden die Gradientenwerte Wᵢⱼ mit einem Binarisierungsschwellwert verglichen, wobei ein binarisiertes Gradientenfeld ermittelt wird, bei dem einem Gradientenwert Wᵢⱼ eine 1 zugeordnet wird, wenn er oberhalb des Binarisierungsschwellwertes liegt und eine Null, wenn er innerhalb des Binarisierungsschwellwertes liegt. Die Analyse des Gradientenfeldes kann beispielsweise durch eine Segmentierung der in dem Gradientenfeld hervortretenden binarisierten Gradientenwerte Wᵢⱼ erfolgen, wobei das Ergebnis der Analyse unmittelbar mit einem Soll-Aufbau des zu prüfenden Objektes 2 verglichen werden kann.

Zusätzlich kann eine Plausibilitätsprüfung durchgeführt werden, bei der beispielsweise Gradientenwerte Wᵢⱼ mit einer gleichen Position in z-Richtung und um 180° versetzten Auswerterichtungen Aⱼ einmal gelöscht werden. Weiterhin können Objektstrukturen, die unabhängig von den Faserlagen 14 bis 17 sind, und in den Schichtdatensätzen enthalten sind, aussortiert werden.

Das beschriebene Verfahren eignet sich prinzipiell für beliebige laminar aufgebaute Objekte 2, sofern diese eine Vorzugsrichtung in der Absorption von Röntgenstrahlung 9 haben.

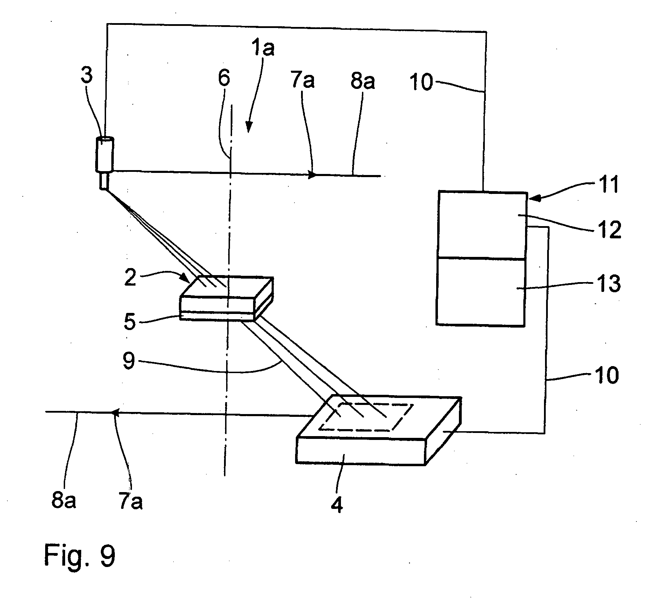

Nachfolgend wird unter Bezugnahme auf die Figur 9 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass die Röntgenquelle 3 und der Röntgendetektor 4 relativ zu dem Objekt 2 in entgegengesetzten Bewegungsrichtungen 7a auf linear verlaufenden Bahnen 8a während der Bestrahlung des Objektes 2 mit Röntgenstrahlung 9 bewegt werden. Ein derartiges Bewegen der Röntgenquelle 3 und des Röntgendetektors 4 während des Bestrahlens ist auch lineare Röntgen-Tomosynthese bekannt. Mit der linearen Röntgen-Tomosynthese können insbesondere länglich ausgedehnte Objekte 2 einfach überprüft werden. Hinsichtlich der Funktionsweise des Röntgencomputertomografen 1a wird auf die Funktionsweise des ersten Ausführungsbeispiels verwiesen.

## Patentansprüche

1. Verfahren zur zerstörungsfreien Prüfung von aus Materiallagen aufgebauten Objekten mittels Röntgencomputertomografie, umfassend die Schritte:
- Bereitstellen eines zu prüfenden und aus mehreren Materiallagen (14 bis 17) aufgebauten Objektes (2),
-- wobei sich die Materiallagen (14 bis 17) im Wesentlichen parallel zu einer x-y-Ebene (E) erstrecken, die durch eine x-Richtung und eine senkrecht zu dieser verlaufende y-Richtung definiert ist,
-- wobei die Materiallagen (14 bis 17) in einer senkrecht zu der x-y-Ebene (E) verlaufenden z-Richtung schichtweise übereinander angeordnet sind, und
-- wobei die Materiallagen (14 bis 17) jeweils eine im Wesentlichen parallel zu der x-y-Ebene (E) verlaufenden Strukturrichtung (19 bis 22) aufweisen,
- Ermitteln von Projektionsdaten des Objektes (2) durch Bestrahlen des Objektes (2) mit Röntgenstrahlung (9) und Detektieren der Röntgenstrahlung (9),
- Rekonstruieren von Objektdaten aus den Projektionsdaten, wobei die Objektdaten zumindest einen Teil des Objektes (2) abbilden,
**gekennzeichnet durch**
ein Auswerten der Objektdaten derart, dass
- aus den Objektdaten entlang von mehreren parallel zu der x-y-Ebene (E) verlaufenden Auswerterichtungen (Aⱼ) und an mehreren Positionen (Si) in z-Richtung Grauwertverläufe (Gᵢⱼ) ermittelt werden, und
- zu den Grauwertverläufen (Gij) zugehörige Gradientenverläufe (Rij) ermittelt und ausgewertet werden.

2. Verfahren nach Anspruch 1**, dadurch gekennzeichnet, dass** das Ermitteln der Projektionsdaten derart erfolgt, dass eine Röntgenquelle (3) und ein Röntgendetektor (4) parallel zu der x-y-Ebene (E) relativ zu dem Objekt (2) bewegt werden.

3. Verfahren nach Anspruch 2, **dadurch gekennzeichnet, dass** die Röntgenquelle (3) und der Röntgendetektor (4) relativ zu dem Objekt (2) in gleichen Bewegungsrichtungen (7) phasenverschoben auf konzentrischen Kreisbahnen (8) bewegt werden.

4. Verfahren nach Anspruch 2, **dadurch gekennzeichnet, dass** die Röntgenquelle (3) und der Röntgendetektor (4) relativ zu dem Objekt (2) in entgegengesetzten Bewegungsrichtungen (7a) auf linear verlaufenden Bahnen (8a) bewegt werden.

5. Verfahren nach einem der Ansprüche 1 bis 4, **dadurch gekennzeichnet, dass** das Rekonstruieren derart erfolgt, dass die Objektdaten in Form von einer Mehrzahl von zweidimensionalen Schichtdatensätzen vorliegen, wobei die Schichtdatensätze jeweils eine parallel zu der x-y-Ebene (E) verlaufende Schicht (Sᵢ) des Objektes (2) an einer zugehörigen Position (i) in z-Richtung abbilden und aus den Schichtdatensätzen die Grauwertverläufe (Gᵢⱼ) ermittelt werden.

6. Verfahren nach einem der Ansprüche 1 bis 5, **dadurch gekennzeichnet, dass** die Auswerterichtungen (Aⱼ) mindestens über einen Winkelbereich von 180°, insbesondere von 190°, und insbesondere von 200°, in äquidistanten Winkelabständen verteilt sind.

7. Verfahren nach Anspruch 5 oder 6, **dadurch gekennzeichnet, dass** die Auswerterichtungen (Aⱼ) für die Schichtdatensätze jeweils durch einen Mittelpunkt (M) der abgebildeten Schicht (Sᵢ) verlaufen.

8. Verfahren nach einem der Ansprüche 1 bis 7, **dadurch gekennzeichnet, dass** für jede Auswerterichtung (Aⱼ) aus mehreren benachbart angeordneten und in der Auswerterichtung (Aⱼ) verlaufenden Grauwertverläufen (Gᵢⱼ) ein gemittelter Grauwertverlauf ermittelt wird.

9. Verfahren nach einem der Ansprüche 1 bis 8, **dadurch gekennzeichnet, dass** für jeden Gradientenverlauf (Rᵢⱼ) ein Gradientenwert (Wᵢⱼ) ermittelt wird, der ein Maß für Extremwerte in dem Gradientenverlauf (Rᵢⱼ) ist.

10. Verfahren nach Anspruch 9, **dadurch gekennzeichnet, dass** der Gradientenwert (Wᵢⱼ) derart ermittelt wird, dass aus Werten des Gradientenverlaufs (Rᵢⱼ), die einen Gradientenschwellwert (Rₛ) überschreiten, eine Summe gebildet wird.

11. Verfahren nach Anspruch 9 oder 10, **dadurch gekennzeichnet, dass** das Auswerten der Gradientenverläufe (Rᵢⱼ) derart erfolgt, dass die Gradientenwerte (Wᵢⱼ) in Abhängigkeit der Position (i) in z-Richtung und der Auswerterichtung (Aⱼ) als zweidimensionales Gradientenfeld dargestellt werden.

12. Verfahren nach Anspruch 11, **dadurch gekennzeichnet, dass** das Gradientenfeld gefiltert wird

13. Verfahren nach Anspruch 11 oder 12, **dadurch gekennzeichnet, dass** das Gradientenfeld in Abhängigkeit eines Binarisierungsschwellwertes binarisiert wird.

14. Verfahren nach einem der Ansprüche 11 bis 13, **dadurch gekennzeichnet, dass** das Gradientenfeld zumindest in Bezug auf ein Merkmal aus der Gruppe der folgenden Merkmale ausgewertet wird:
Anzahl der Materiallagen (14 bis 17), Vorzugsrichtung der Materiallagen (14 bis 17), Reihenfolge der Materiallagen (14 bis 17), Dicke und Position der Materiallagen (14 bis 17) in z-Richtung.

15. Röntgencomputertomograf zur zerstörungsfreien Prüfung von aus Materiallagen aufgebauten Objekten mittels Röntgencomputertomografie, umfassend
- einer Röntgenquelle (3) zum Bestahlen eines zu prüfenden und aus mehreren Materiallagen (14 bis 17) aufgebauten Objektes (2) mit Röntgenstrahlung (9),
-- wobei sich die Materiallagen (14 bis 17) im Wesentlichen parallel zu einer x-y-Ebene (E) erstrecken, die durch eine x-Richtung und eine senkrecht zu dieser verlaufende y-Richtung definiert ist,
-- wobei die Materiallagen (14 bis 17) in einer senkrecht zu der x-y-Ebene (E) verlaufenden z-Richtung schichtweise übereinander angeordnet sind, und
-- wobei die Materiallagen (14 bis 17) jeweils eine im Wesentlichen parallel zu der x-y-Ebene (E) verlaufende Strukturrichtung (19 bis 22) aufweisen,
- einen Röntgendetektor (4) zum Ermitteln von Projektionsdaten des Objektes (2) aus der detektierten Röntgenstrahlung (9),
- einen Objektträger (5) zum Aufnehmen des Objektes (2) zwischen der Röntgenquelle (3) und dem Röntgendetektor (4), und
- eine Recheneinrichtung (11) mit
-- einer Rekonstruktionseinheit (12) zum Rekonstruieren von zumindest einen Teil des Objektes (2) abbildenden Objektdaten aus den Projektionsdaten,
**dadurch gekennzeichnet, dass**
- die Recheneinrichtung (11) eine Auswerteeinheit (13) zum Auswerten der Objektdaten aufweist, wobei die Auswerteeinheit (13) derart ausgebildet ist, dass-- aus den Objektdaten entlang von mehreren parallel zu der x-y-Ebene (E) verlaufenden Auswerterichtungen (Aj) und an mehreren Positionen (i) in z-Richtung Grauwertverläufe (Gij) ermittelbar sind, und
- zu den Grauwertverläufen (Gij) zugehörige Gradientenverläufe (Rij) ermittelbar und auswertbar sind.

## Claims

1. Method for the non-destructive testing of objects constructed from material layers by means of x-ray computer tomography comprising the steps:
- providing an object (2) to be tested constructed from a plurality of material layers (14 to 17),
-- wherein the material layers (14 to 17) extend substantially parallel to an x-y plane (E) which is defined by an x-direction and a y-direction running perpendicular thereto,
-- wherein the material layers (14 to 17) are arranged on top of one another in layers in a z-direction perpendicular to the x-y- plane (E), and
-- wherein the material layers (14 to 17) each have a structure direction (19 to 22) substantially parallel to the x-y-plane (E),
- determining projection data of the objet (2) by radiating the object (2) with x-rays (9) and detecting the x-rays (9),
- reconstructing object data from the projection data, wherein the object data depict at least a portion of the object (2),
**characterised by**
evaluating the object data such that
- grey tone distributions (Gᵢⱼ) are determined from the object data along a plurality of evaluation directions (Aⱼ) running parallel to the x-y-plane (E) and at a plurality of positions (Si) in z-direction and
- gradient paths (Rᵢⱼ) associated with the grey tone distributions (Gᵢⱼ) are determined and evaluated.

2. Method according to claim 1, **characterised in that** the projection data are determined **in that** an x-ray source (3) and an x-ray detector (4) are moved parallel to the x-y-plane (E) relative to the object (2).

3. Method according to claim 2, **characterised in that** the x-ray source (3) and the x-ray detector (4) are moved out-of-phase relative to the object (2) in the same directions of movement (7) on concentric orbits (8).

4. Method according to claim 2, **characterised in that** the x-ray source (3) and the x-ray detector (4) are moved relative to the object (2) in opposite directions of movement (7a) on linear tracks (8a).

5. Method according to one of claims 1 to 4, **characterised in that** the reconstruction is performed such that the object data are present in the form of a plurality of two-dimensional layer data sets, wherein the layer data sets each depict a layer (Sᵢ) of the object (2) running parallel to the x-y-plane (E) in an associated position (i) in z-direction and the grey tone distributions (Gᵢⱼ) are determined from the layer data sets.

6. Method according to one of claims 1 to 5, **characterised in that** the evaluation directions (Aⱼ) are distributed at equidistant angular distances at least over an angular range of 180°, in particular 190° and in particular 200°.

7. Method according to claim 5 or 6, **characterised in that** the evaluation directions (Aⱼ) for the layer data sets run respectively through a middle point (M) of the depicted layer (Sᵢ).

8. Method according to one of claims 1 to 7, **characterised in that** for each evaluation direction (Aⱼ) from a plurality of adjacent grey tone distributions (Gᵢⱼ) running in evaluation direction (Aⱼ) an averaged grey tone distribution is determined.

9. Method according to one of claims 1 to 8, **characterised in that** for each gradient path (Rᵢⱼ) a gradient value (Wᵢⱼ) is determined which is a measure for extreme values in the gradient path (Rᵢⱼ).

10. Method according to claim 9, **characterised in that** the gradient value (Wᵢⱼ) is determined such that from values of the gradient path (Rᵢⱼ) which exceed a gradient threshold (R_{S}) a sum is formed.

11. Method according to claim 9 or 10, **characterised in that** the evaluation of the gradient paths (Rᵢⱼ) is performed such that the gradient values (Wᵢⱼ) are represented as a function of position (i) in z-direction and the evaluation direction (Aⱼ) is shown as a two-dimensional gradient field.

12. Method according to claim 11, **characterised in that** the gradient field is filtered.

13. Method according to claim 11 or 12, **characterised in that** the gradient field is binarised as a function of a binarisation threshold.

14. Method according to one of claims 11 to 13, **characterised in that** the gradient field is evaluated at least with regard to a feature from the following group of features: number of material layers (14 to 17), preferred direction of the material layers (14 to 17), sequence of the material layers (14 to 17), thickness and position of the material layers (14 to 17) in z-direction.

15. X-ray computer tomograph for the non-destructive testing of objects constructed from material layers by means of x-ray computer tomography, comprising
- an x-ray source (3) for x-raying an object (2) to be tested constructed from a plurality of material layers (14 to 17) with x-ray radiation (9),
-- wherein the material layers (14 to 17) extend substantially parallel to an x-y plane (E) which is defined by an x-direction and a y-direction running perpendicular thereto,
-- wherein the material layers (14 to 17) are arranged in layers on top of one another in a z-direction perpendicular to the x-y-plane (E) and
-- wherein the material layers (14 to 17) each have a structure direction (19 to 22) running substantially parallel to the x-y-plane (E),
- an x-ray detector (4) for determining projection data of the object (2) from the detected x-ray radiation (9),
- an object carrier (5) for picking up the object (2) between the x-ray source (3) and the x-ray detector (4) and
- a calculation device (11) comprising
-- a reconstruction unit (12) for reconstructing object data depicting at least a portion of the object (2) from the projection data,
**characterised in that**
- the calculation device (11) comprises an evaluation unit (13) for evaluating the object data, wherein the evaluation unit (13) is configured such that
-- grey tone distributions (Gᵢⱼ) can be determined from the object data along a plurality of evaluation directions (Aj) running parallel to the x-y-plane (E) and at several positions (i) in z-direction and
-- gradient paths (Rᵢⱼ) associated with the grey tone distributions (Gᵢⱼ) can be determined and evaluated.

## Revendications

1. Procédé pour le contrôle non destructif d'objets constitués de couches de matériau à l'aide de la tomodensitométrie aux rayons X assistée par ordinateur comprenant les étapes :
- de mise au point d'un objet (2) à contrôler et constitué de plusieurs couches de matériau (14 à 17),
-- les couches de matériau (14 à 17) s'étendant sensiblement parallèles dans un plan x-y (E), qui est défini par un axe x et un axe y, qui lui est perpendiculaire,
-- les couches de matériau (14 à 17) étant disposées les unes sur les autres en strates sur un axe z perpendiculaire par rapport au plan x-y (E), et
-- les couches de matériau (14 à 17) présentant une direction de structure (19 à 22) s'étendant sensiblement parallèle par rapport au plan x-y (E),
- de détermination de données de projection de l'objet (2) par une illumination de l'objet (2) par un rayonnement X (9) et de détection du rayonnement X (9),
- de reconstruction des données de l'objet à partir des données de projection, les données de l'objet formant au moins une partie de l'objet (2),
**caractérisé par**
une évaluation des données de l'objet de telle sorte
qu'à partir des données de l'objet, des évolutions de valeurs de gris (Gᵢⱼ) sont déterminées le long de plusieurs directions d'évaluation s'étendant parallèlement par rapport au plan x-y (E), et en plusieurs positions (Sᵢ) sur l'axe z, et
que des gradients correspondants aux évolutions des valeurs de gris (Gᵢⱼ) sont déterminés et exploités.

2. Procédé selon la revendication 1, **caractérisé en ce que** la détermination des données de projection s'effectue de telle manière qu'une source (3) de rayons X et un détecteur (4) de rayons sont déplacés par rapport à l'objet (2) parallèlement au plan x-y (E).

3. Procédé selon la revendication 2, **caractérisé en ce que** la source (3) de rayons X et le détecteur (4) de rayons X sont déplacés par rapport à l'objet (2) dans des directions de déplacement identiques, avec un décalage de phases, sur des orbites (8) concentriques.

4. Procédé selon la revendication 2, **caractérisé en ce que** la source (3) de rayons X et le détecteur (4) de rayons X sont déplacés dans des directions de déplacement (7a), opposées par rapport à l'objet, sur des bandes (8a) s'étendant linéairement.

5. Procédé selon l'une des revendications 1 à 4, **caractérisé en ce que** la reconstruction se déroule de telle manière que les données de l'objet se présentent sous la forme d'une multitude de données de couches bidimensionnelles, les données de couches formant respectivement une couche (Sᵢ) de l'objet (2) s'étendant parallèlement par rapport au plan x-y (E) à une position (i) sur l'axe z correspondante, et les évolutions des valeurs de gris (Gᵢⱼ) étant déterminées à partir des données de couches.

6. Procédé selon l'une des revendications 1 à 5, **caractérisé en ce que** les directions d'évaluation (Aⱼ) sont distribuées sur des distances angulaires équidistantes au moins sur un domaine angulaire de 180 °, en particulier de 190 °, et tout particulièrement de 200 °.

7. Procédé selon les revendications 5 ou 6, **caractérisé en ce que** les directions d'évaluation (Aⱼ) pour les données de couches passent respectivement par un point central (M) de la couche (Sᵢ) représentée.

8. Procédé selon l'une des revendications 1 à 7, **caractérisé en ce que,** pour chaque direction d'évaluation (Aⱼ), une évolution des valeurs de gris moyennée est déterminé à partir de plusieurs évolutions de valeurs de gris (Gᵢⱼ) voisines et s'étendant dans la direction d'évaluation (Aⱼ).

9. Procédé selon l'une des revendications 1 à 8, **caractérisé en ce que,** pour chaque évolution de gradient (Rᵢⱼ) une valeur de gradient (Wᵢⱼ) est déterminée, qui est une grandeur pour des valeurs extrêmes dans l'évolution des gradients (Rᵢⱼ).

10. Procédé selon la revendication 9, **caractérisé en ce que** la valeur de gradient (Wᵢⱼ) est évaluée de telle manière qu'une somme soit formée à partir de valeurs de l'évolution des gradients (Rᵢⱼ) qui excèdent une valeur plancher de gradient (R_{S}).

11. Procédé selon les revendications 9 ou 10, **caractérisé en ce que** l'évaluation des évolutions de gradient (Rᵢⱼ) soit effectuée de telle manière que les valeurs de gradient (Wᵢⱼ) sont représentées sous la forme d'un champ de gradients bidimensionnel en fonction de la position (i) sur l'axe z et de la direction d'évaluation (Aⱼ).

12. Procédé selon la revendication 11, **caractérisé en ce que** le champ de gradients passe par un filtre.

13. Procédé selon les revendications 11 ou 12, **caractérisé en ce que** le champ de gradients est mis sous forme binaire en fonction d'une valeur plancher de binairisation.

14. Procédé selon l'une des revendications 11 à 13, **caractérisé en ce que** le champ de gradients est évalué au moins en relation avec une caractéristique faisant partie du groupe: nombre de couches de matériau (14 à 17), orientation préférentielle des couches de matériau (14 à 17), étagement des couches de matériau (14 à 17), épaisseur et position des couches de matériaux (14 à 17) sur l'axe z.

15. Tomodensitomètre aux rayons X assisté par ordinateur pour le contrôle non destructif d'objets construits en couches de matériau à l'aide de la tomodensitométrie aux rayons X assistée par ordinateur, comprenant
- une source (3) de rayons X pour l'illumination d'un objet (2) construit à partir de plusieurs couches de matériaux (14 à 17) à l'aide d'un rayonnement X (9),
-- les couches de matériau (14 à 17) s'étendant sensiblement parallèles par rapport à un plan x-y (E), qui est défini par un axe x et un axe y qui lui est perpendiculaire,
-- les couches de matériau (14 à 17) étant disposées les unes sur les autres en couches sur un axe z perpendiculaire par rapport au plan x-y (E), et
-- les couches de matériau (14 à 17) présentant une orientation de structure (19 à 22) s'étendant sensiblement parallèle par rapport au plan x-y (E),
- un détecteur (4) de rayons X pour la détermination de données de projection de l'objet (2) à partir du rayonnement X (9) de détection,
- un support (5) d'objet pour la réception de l'objet (2) entre la source (3) de rayons X et le détecteur (4) de rayons X, et
- un système de calcul (11) comprenant
-- une unité de reconstruction (12) pour la reconstruction des données d'objet représentant au moins une partie de l'objet (2) à partir des données de projection,
**caractérisé en ce que**
- le système de calcul (11) présente une unité d'évaluation (13) pour l'évaluation des données d'objet, l'unité d'évaluation (13) étant conçue de telle manière
-- qu'à partir des données d'objet, des évolutions des valeurs de gris (Gᵢⱼ) peuvent être déterminées le long de plusieurs directions d'évaluation (Aⱼ) s'étendant parallèles par rapport au plan x-y (E), plusieurs directions d'évaluation (Aⱼ) s'étendant parallèles par rapport au plan x-y (E) et à plusieurs positions (i) de l'axe z, et
-- des évolutions des gradients (Rᵢⱼ) correspondants aux évolutions des valeurs de gris (Gᵢⱼ) peuvent être déterminées et évaluées.
